# EUROPÄISCHE PATENTANMELDUNG

(11) **EP 1 795 481 A1**
(43) Veröffentlichungstag der Anmeldung: **13.06.2007**
(21) Anmeldenummer: 05111789.3
(22) Anmeldetag: 07.12.2005
(51) Int. Cl.: B66B 1/34

(54) **Beförderungsanlage und Verfahren zur Inbetriebnahme einer Beförderungsanlage**

(71) Anmelder: INVENTIO AG, 6052 Hergiswil (CH)
(72) Erfinder: Tschümperlin, Erich, 6010 Kriens (CH)
(74) Vertreter: Gaussmann, Andreas

(57) **Zusammenfassung**

Die Erfindung betrifft ein Verfahren zur Inbetriebnahme einer Beförderungsanlage, die Beförderungsanlage umfasst mehrere Komponenten (21-27), wobei wenigstens ein Beförderungsmittel, eine Anlagensteuerung (20) und ein Antrieb enthalten sind; ein für unterschiedliche Anlagensteuerungen (20) geeignetes Steuerungsprogramm (11) enthält verschiedene Steuerungsfunktionen (12-18), wobei das Steuerungsprogramm (11) zum Betrieb der Beförderungsanlage in der Anlagensteuerung (20) ausgeführt wird, das Verfahren umfasst die Schritte: Aktivieren der Beförderungsanlage (S30); Erkennen von Identifikationsnummern (29) von Komponenten (21-27) der Beförderungsanlage (S31); Überprüfen, ob die erkannten Identifikationsnummern (29) zu einer zugelassenen Komponentenkombinationen gehören (S32); Erkennen des Anlagensteuerungstyps (11); Aktivieren der verschiedenen Steuerungsfunktionen (12-18) im Steuerungsprogramm (11) in Abhängigkeit des erkannten Anlagensteuerungstyps; Freigeben der Beförderungsanlage (S37).

## Beschreibung

Die Erfindung betrifft eine Beförderungsanlage und ein Verfahren zur Inbetriebnahme einer Beförderungsanlage.

Beförderungsanlagen bestehen aus einer Vielzahl von unterschiedlichen Komponenten. Insbesondere zählen dazu ein Beförderungsmittel, beispielsweise eine Aufzugskabine oder eine Rolltreppe. Weiterhin ist ein Antrieb für das Beförderungsmittel und eine Anlagesteuerung vorgesehen. Optional sind Kommunikations- und Sicherheitskomponenten angeordnet. Zur Steuerung der Beförderungsanlage wird in der Anlagensteuerung ein Steuerprogramm ausgeführt. Die Anlagensteuerung verfügt über unterschiedliche Funktionen.

Bisher wurde bei einer Inbetriebnahme einer Beförderungsanlage das Steuerungsprogramm einschließlich der erforderlichen Treiber und Funktionen anhand von Parametereinstellungen aktiviert. Diese Parametereinstellungen werden in der Anlagensteuerung gespeichert. Alternativ werden diese Parametereinstellungen bei der Konfiguration beim Hersteller erstellt und in die Steuerung geladen. Es ist auch möglich, die Parameter manuell an der Anlagensteuerung einzugeben, um somit das Steuerprogramm für die Anlagensteuerung zu aktivieren und einzustellen.

Um den Entwicklungsaufwand für Steuerungsprogramme gering zu halten, ist es üblich, ein Steuerungsprogramm für eine Art einer Beförderungsanlage zu verwenden. So wird beispielsweise ein gemeinsames Steuerungsprogramm für verschiedene Aufzugsanlagensteuerungen verwendet. Ein weiteres gemeinsames Steuerungsprogramm wird für verschiedene Rolltreppensteuerungen verwendet. Aufzugsanlagen müssen viele unterschiedliche Funktionen aufweisen. Dabei ist es in den einzelnen Anwendungsfällen nicht erforderlich, alle möglichen Funktionen zu realisieren. Das Steuerungsprogramm ist jedoch dafür ausgelegt, auch eine Aufzugsanlage steuern zu können, bei der alle möglichen Funktionen realisiert sind. Als Beispiel für eine einfache Realisierung einer Beförderungsanlage kann man einen Lastenaufzug anführen, der nur zwischen zwei Stockwerken bewegt wird. Der Steuerungsaufwand ist in diesem Fall gering. Bei einem Personenaufzug in einem Hochhaus ist der Steuerungsaufwand wesentlich höher. Ein derartiger Personenaufzug weist beispielsweise eine Aufzugs-Rufsteuerung auf. Weiter sind Sicherheitsschaltungen erforderlich. Optional kann eine Klimatisierung der Aufzugskabinen vorhanden sein.

Bisher war es so, dass ein gemeinsames Steuerprogramm für eine Beförderungsanlage verwendet wurde, unabhängig davon, welche Funktionen in der Beförderungsanlage realisiert waren oder nicht. Die Einstellung, welche Funktionen im Steuerprogramm für die individuelle Beförderungsanlage benötigt werden, wurde, wie oben erwähnt, anhand von Parametern festgelegt, die entweder beim Hersteller programmiert wurden oder manuell beim Inbetriebnehmen der Beförderungsanlage eingegeben werden mussten.

Aufgrund der Vielzahl von unterschiedlichen Anlagensteuerungstypen mit unterschiedlichen Funktionen bei einer Beförderungsanlage ist es jedoch immens wichtig, dass der richtige Anlagensteuerungstyp erkannt wird und die richtigen Funktionen für die jeweilige Beförderungsanlage aktiviert werden. Derartige Anlagensteuerungstypen sind je nach Aufwand unterschiedlich komplex ausgestaltet. Beispielsweise muss eine Anlagensteuerung für den oben erwähnten Lastenaufzug nicht in der Lage sein, eine Klimaanlage zu steuern. Eine Anlagensteuerung für den oben erwähnten Personenaufzug ist dagegen in ihrem Funktionsumfang wesentlich komplexer.

Die verschiedenen Anlagensteuerungstypen können nur mit dem passenden Steuerungsprogramm betrieben werden, wobei die große Anzahl der möglichen Funktionen zu Fehlkonfigurationen führen kann, da es Abhängigkeiten zwischen den einzelnen Funktionen im Steuerungsprogramm und Komponenten einer Beförderungsanlage gibt. Das Vorhandensein von vielen Funktionen im Steuerungsprogramm und vielen Parametern erfordert jedoch auch viele Regeln. Diese stellen Fehlerquellen dar. Somit ist eine Beförderungsanlage, bei der nur wenige oder keine Parametern eingestellt werden müssen, eine zuverlässigere Beförderungsanlage.

Aufgabe der Erfindung ist es deshalb, ein Verfahren und eine Vorrichtung anzugeben, die es ermöglichen, bei einer speziellen Komponentenkombination einer Beförderungsanlage den Anlagensteuerungstyp zu erkennen und in Abhängigkeit vom Anlagensteuerungstyp die richtigen Steuerungsfunktionen zu aktivieren, die mit dieser Komponentenkombination korrespondieren. Steuerungsfunktionen, die für nicht installierte Komponentenkombination geeignet sind, müssen deaktiviert bleiben.

Die Aufgabe wird durch die Merkmale der unabhängigen Ansprüche gelöst. Vorteilhafte Ausgestaltungen ergeben sich aus den Unteransprüchen.

Die Erfindung beruht auf der Erkenntnis, dass bei einer Selbsterkennung der Komponenten einer Beförderungsanlage die Fehlerquelle der manuellen Eingabe ausgeschlossen wird. Somit ist eine erfindungsgemäße Vorrichtung sicherer und weniger fehleranfällig. Außerdem wird ein zusätzliches Risiko eines Hardwarekonflikts bei nicht aufeinander abgestimmte Komponenten bei der installierten Komponentenkombination reduziert, wodurch das Sicherheitsrisiko reduziert wird. Insbesondere im Bereich von Beförderungsanlagen, zu denen Aufzugsanlagen und Rolltreppen gehören, sind Sicherheitsrisiken nicht akzeptabel.

Das Verfahren garantiert, dass nur die Steuerungsfunktionen des Steuerungsprogramms, die für eine bestimmte Komponentenkombination vorgesehen sind, in der Anlagensteuerung ausgeführt werden.

Steuerungsprogramme unterliegen einer ständigen Weiterentwicklung. Einzelne Funktionen von Beförderungsanlagen werden weiterentwickelt, wodurch es erforderlich ist, die Steuerungsfunktionen im Steuerungsprogramm an die neuen Komponenten anzupassen und ggf. auch die Treiber zur Ansteuerung der neuen Komponenten zu verändern. Hierbei ist es enorm wichtig, dass bei einem Update eines Treibers in der Anlagensteuerung, dieser Treiber auch nur dann in die Anlagensteuerung der Beförderungsanlage geladen wird und von dieser ausgeführt wird, wenn dieser Treiber auch für die Anlagensteuerung vorgesehen und getestet wurde.

Erfindungsgemäß wird vorgeschlagen, dass die Komponenten der Beförderungsanlage Identifikationsnummern aufweisen, die beim Aktivieren der Beförderungsanlage erkannt werden. Anhand der erkannten Identifikationsnummern wird festgestellt, ob die erkannten Identifikationsnummern zu einer zugelassenen Komponentenkombination gehören. Erst wenn die erkannten Identifikationsnummern zu einer zugelassenen Komponentenkombination gehören, wird daraus geschlossen, welcher Anlagensteuerungstyp vorliegt. Werden Identifikationsnummern erkannt, die zu keiner zugelassenen Komponentenkombination gehören, wird die Inbetriebnahme der Beförderungsanlage unterbrochen. Die zugelassenen Komponentenkombinationen sind Kombinationen der Komponenten, für welche ein Anlagensteuerungstyp vorliegt, welcher in der Lage ist, diese Komponente zu steuern. Tabellen können erstellt werden, welche für jeden Anlagensteuerungstyp die zugelassenen Komponentenkombinationen auflisten und darstellen.

Nachdem erkannt wurde, welcher Anlagensteuerungstyp vorliegt, wird im Steuerungsprogramm der erkannte Anlagensteuerungstyp eingestellt. In Abhängigkeit des erkannten Anlagensteuerungstyps werden die verschiedenen Steuerungsfunktionen im Steuerungsprogramm aktiviert. Erst danach erfolgt die Freigabe der Beförderungsanlage.

In einer besonderen Ausgestaltung der Erfindung ist vorgesehen, dass nur die Treiber für die Steuerungsfunktionen in die Anlagensteuerung geladen werden, die zuvor auch als Steuerungsfunktionen aktiviert wurden. Dies stellt sicher, dass nur die richtigen Treiber in die Anlagensteuerung geladen werden.

Bei einer weiteren vorteilhaften Ausgestaltung des erfindungsgemäßen Verfahrens wird nach dem Einstellen des Anlagensteuerungstyps überprüft, ob die erkannte Komponentenkombination mit den aktivierten Steuerungsfunktionen übereinstimmt. In dem Steuerungsprogramm ist die Information enthalten, für welche Anlagensteuerungstypen das Steuerprogramm mit den aktivierten Steuerfunktionen freigegeben ist. Die Beförderungsanlage wird erst dann freigegeben, wenn die Komponentenkombinationen und die Steuerungsfunktionen zulässig sind, d.h wenn die Komponentenkombinationen in der Lage sind, diese Steuerungsfunktionen auszuführen. Tabellen können erstellt werden, welche für jeden Anlagensteuerungstyp die zugelassenen Steuerungsfunktionen auflisten und darstellen.

In einem weiteren vorteilhaften Verfahren der Erfindung wird nach einem Freigeben der Beförderungsanlage die Beförderungsanlage erneut aktiviert. Durch dieses erneute Starten der Beförderungsanlage wird ein Laden der aktualisierten Treiber sichergestellt.

In einer vorteilhaften Ausgestaltung der Erfindung ist die Beförderungsanlage eine Aufzugsanlage. In einer alternativen Ausgestaltung der Erfindung ist die Beförderungsanlage eine Rolltreppe.

Die Erfindung wird auch durch eine Beförderungsanlage mit mehreren Komponenten gelöst, wobei wenigstens ein Beförderungsmittel einer Anlagensteuerung und ein Antrieb angeordnet sind und die Anlagensteuerung einen vorherbestimmten Funktionsumfang aufweist, wobei zum Betreiben der Beförderungsanlage ein für unterschiedliche Anlagensteuerungen geeignetes Steuerungsprogramm in der Anlagensteuerung ausführbar ist, welches verschiedene Steuerungsfunktionen enthält, wobei die Komponenten der Beförderungsanlage Identifikationsnummern aufweisen und bei einer Aktivierung der Beförderungsanlage vorgesehen ist, die Identifikationsnummern der aktivierten Komponenten zu erkennen und im Steuerungsprogramm eine Liste zum Überprüfen enthalten ist, ob die erkannten Identifikationsnummern zu einer zugelassenen Komponentenkombination gehören und ein Anlagensteuerungstyp in Abhängigkeit der erkannten Identifikationsnummern im Steuerungsprogramm einstellbar ist und die im Steuerungsprogramm enthaltenen Steuerungsfunktionen in Abhängigkeit des Anlagensteuerungstyps aktivierbar sind, wobei eine Überprüfung vorgesehen ist, ob die erkannte Komponentenkombination mit den aktivierten Steuerungsfunktionen übereinstimmt und die Beförderungsanlage freigebbar ist, wenn die Kombination und die aktivierten Steuerungsfunktionen übereinstimmen.

Nachfolgend wird die Erfindung anhand von Ausführungsbeispielen näher erläutert, die in schematischer Weise in den Zeichnungen dargestellt sind. Hierbei zeigen
- Fig. 1: einen schematischen Aufbau eines Steuerungsprogramms mit unterschiedlichen Steuerungsfunktionen gemäß der vorliegenden Erfindung;
- Fig. 2: eine schematische Darstellung der Komponenten einer Anlagensteuerung gemäß der vorliegenden Erfindung;
- Fig. 3: ein Flussablaufdiagramm für die Inbetriebnahme einer Beförderungsanlage.
- Fig. 4: Tabelle der relevanten Komponentenkombinationen für die Erkennung jedes Anlagensteuerungstyps.

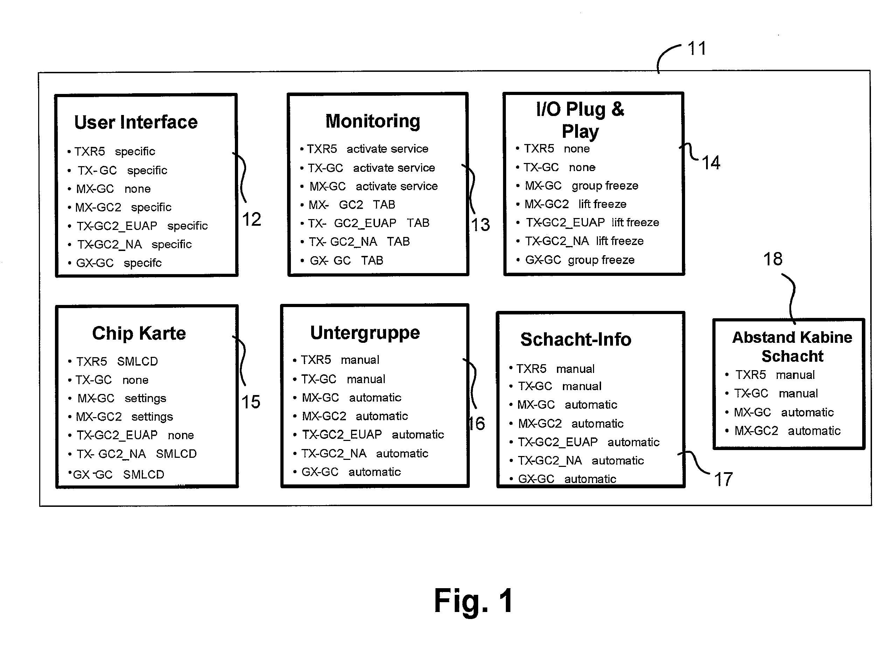

Figur 1 zeigt den modularen Aufbau eines Steuerungsprogramms 11, bei dem unterschiedliche Steuerungsfunktionen 12 bis 18 implementiert sind. Jede Steuerungsfunktion 12 bis 18 ist für eine bestimmte Funktion der Beförderungsanlage verantwortlich. Die Steuerungsfunktion 12 ist für die Ansteuerung von User-Interfaces in der Beförderungsanlage zuständig. Die Steuerungsfunktion 13 dient dem Monitoring und der Ein- und Ausgabesteuerung von Parametern und Betriebsgrößen an externe und interne Komponenten. Die Steuerungsfunktion 14 übernimmt die Funktion I/O Plug & Play, beispielerweise die Klimatisierung einer oder mehrerer Aufzugskabinen. Die Steuerungsfunktion 15 steuert einen Chipkartenleser. Die Steuerungsfunktion 16 übernimmt eine Untergruppensteuerung für Teile einer Aufzugsanlage. Die Steuerungsfunktion 17 dient der Zuführung von Informationen eines Aufzugsschachts, die beispielsweise mittels Sensoren aufgenommen werden. Die Steuerungsfunktion 18 steuert die Abstandskontrolle zwischen Kabine und Schacht. Eine andere wichtige Steuerungsfunktion ist zum Beispiel die Steuerung des Sicherheitskreises.

In den einzelnen Modulen oder Steuerfunktionen 12-18 sind verschiedene Anlagensteuerungstypen dargestellt. Es ist erkennbar, dass für die unterschiedlichen Anlagensteuerungstypen TXR5, TX-GC, MX-GC, MX-GC2, TX GC2_EUAP, TX GC2_NA und GX-GC verschiedene Einstellungen für die Steuerungsfunktionen 12-18 im Steuerungsprogramm 11 erforderlich sind. So ist beispielsweise in der Steuerungsfunktion 14, die für die Klimatisierung der Beförderungsanlage zuständig ist, erkennbar, dass für eine Steuerung TXR5 keine Klimatisierung vorgesehen ist. Bei einem anderen Anlagensteuerungstyp, beispielsweise MX-GC 2, ist eine Klimatisierung pro Aufzugskabine vorgesehen. Bei einem weiteren Anlagensteuerungstyp GX-GC ist eine Gruppenklimatisierung mehrerer Aufzugskabinen vorgesehen. Ebenso ist es bei der Steuerungsfunktion 15 für den Chipkartenleser erkennbar, dass für verschiedene Anlagensteuerungstypen verschiedene Chipkartenlesegeräte eingesetzt werden. So ist es beispielsweise bei der Steuerung TX-GC erkennbar, dass kein Chipkartenleser erforderlich ist. Für die Anlagensteuerung MX-GC sind besondere Einstellungen für den Chipkartenleser erforderlich. Es ist leicht erkennbar, dass durch die Vielzahl der unterschiedlichen Anlagensteuerungstypen bei der Aktivierung der einzelnen Steuerungsfunktionen 12-18 oder auch der Steuerungsmodule große Sorgfalt walten muss, um Sicherheitsrisiken zu vermeiden.

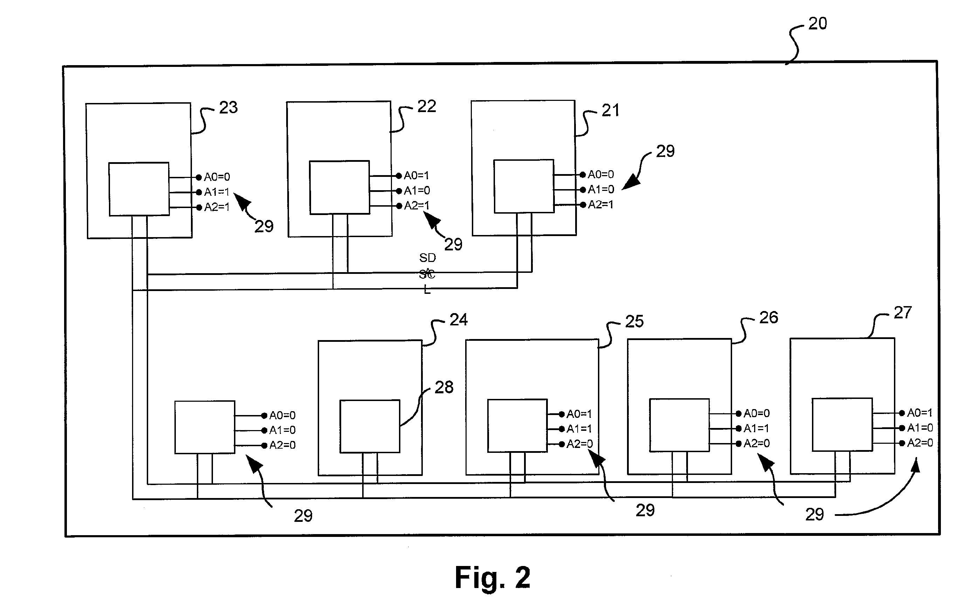

Figur 2 zeigt in einer schematischen Darstellung die verschiedenen Komponenten einer Anlagensteuerung 20. Die Module 21-23 sind Kommunikationsmodule der Anlagensteuerung. Die Anlagensteuerung 20 enthält einen Mikroprozessor 24, der über eine I²C-Funktionalität 28 verfügt. Über diesen I²C-Bus werden Identifikationsnummern 29 an den einzelnen Komponenten 21-27 ausgelesen, die in EEPROM-Speichermodulen der einzelnen Komponenten 21 bis 27 gespeichert sind. Die Identifikationsnummern 29 sind durch Adressstellen A0 bis A2 gekennzeichnet. Durch das Bereitstellen von 3 Bits lassen sich ausreichend viele unterschiedliche Identifikationsnummern bereitstellen. Die Figur 2 zeigt den Aufbau einer TX-GC Anlagensteuerung.

Eine Komponente 25 dient der Sicherheitskreiszuführung 25. Eine weitere Komponente 26 dient der Sicherheitssteuerung 26. Weiter ist eine Bremssteuerung 27 vorgesehen.

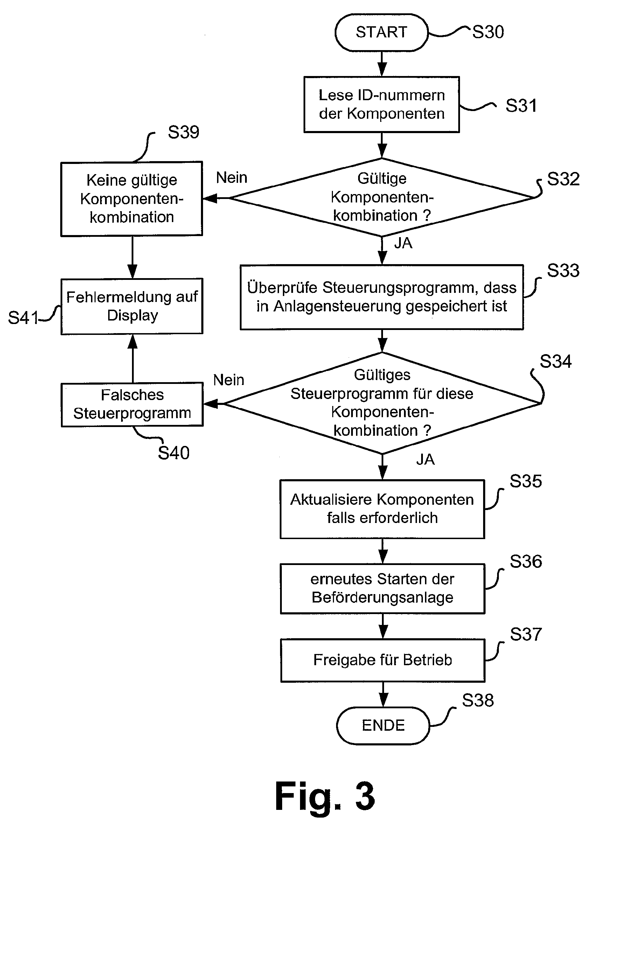

Ein in Figur 3 dargestelltes Flussablaufdiagramm zeigt den Ablauf eines erfindungsgemäßen Verfahrens. In Schritt S30 wird das Verfahren zur Inbetriebnahme einer Beförderungsanlage gestartet. Nachdem die Anlage aktiviert wurde, werden die Komponenten der Anlage in Schritt S31 erkannt, indem die gespeicherten Identifikationsnummern 29 der installierten Komponenten 21-27 durch den Mikroprozessor 24 über den I²C-Bus gelesen werden. In Schritt S32 wird überprüft, ob die erkannte Komponentenkombination eine gültige Komponentenkombination darstellt.

Die zugelassenen oder gültigen Komponentenkombinationen sind Kombinationen der Komponenten, für welche ein Anlagensteuerungstyp vorliegt, welcher in der Lage ist, diese Komponente zu steuern. Eine Tabelle ist in der Steuerungssoftware gespeichert, welche für jeden Anlagensteuerungstyp die zugelassenen Komponentenkombinationen auflistet und darstellt. Die Steuerungssoftware kann somit erkennen, ob die detektierte Komponentenkombination gültig und zugelassen ist.

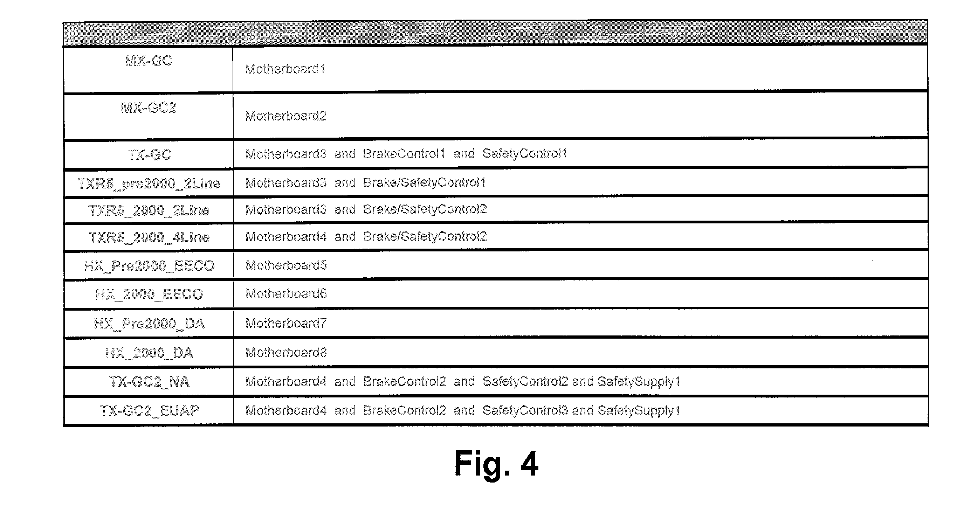

Eine solche Tabelle ist ähnlich wie die in Fig. 4 dargestellte Tabelle, welche aber nur die relevanten Komponentenkombinationen für die Erkennung jedes Anlagensteuerungstyps aufzeigt. Wenn die Steuerungssoftware die in Fig. 4 aufgelisteten Komponentenkombinationen detektiert, kann die Steuerungssoftware der Kombination einen bestimmten Anlagensteuerungstyp zuordnen. Ein bestimmter Anlagensteuerungstyp kann aber noch viele andere zugelassene und gültige Komponentenkombinationen steuern, welche in Fig. 4 nicht aufgeführt worden sind.

Wenn es keine gültige Komponentenkombination darstellt, wird in Schritt S39, S41 eine Mitteilung an den Serviceingenieur über eine Anzeigevorrichtung ausgegeben. Liegt eine gültige Komponentenkombination vor, wird in Schritt S33 überprüft, welches Steuerungsprogramm in der Anlagensteuerung gespeichert ist. In einem weiteren Schritt S34 wird überprüft, ob diese Software oder das Steuerungsprogramm für die individuell erkannte Komponentenkombination freigegeben ist. Ist es das falsche Steuerungsprogramm, wird in den Schritten S40, S41 eine Mitteilung über eine Anzeigenvorrichtung ausgegeben. Ist das Steuerungsprogramm für diese Komponentenkombination freigegeben, werden die Komponenten der Aufzugsanlage in Schritt S35 aktualisiert, soweit dies erforderlich ist. Danach wird in Schritt S36 die Beförderungsanlage erneut gestartet, um ein ordnungsgemäßes Starten aller Steuerungsfunktionen, Treiber und Komponenten zu ermöglichen. In Schritt S37 ist die Beförderungsanlage für den Einsatz bereit. Mit Schritt S38 wird das Programm zur Inbetriebnahme beendet
Somit werden eine Beförderungsanlage und ein Verfahren zur Inbetriebnahme einer Beförderungsanlage bereitgestellt, bei denen sichergestellt ist, das nur das Steuerprogramm auf der Anlagensteuerung ausgeführt wird, das auch für den Anlagensteuerungstyp freigegeben ist. Weiter kann somit ein gemeinsames Steuerprogramm für verschiedene Anlagensteuerungstypen verwendet werden, wobei dann verschiedene Entwicklungsversionen des Steuerprogramms nur für bestimmte Anlagensteuerungstypen getestet und freigegeben sind. Somit existiert für eine Vielzahl von unterschiedlichen Anlagensteuerungstypen nur ein einziges Steuerprogramm, welches zentral weiterentwickelt werden kann, wodurch die Fehlersuche im Steuerprogramm vereinfacht werden kann und neue Steuerfunktionen für alle Anlagensteuerungstypen entwickelt werden können. Durch das Verwenden von Versions-oder Generationsnummern für das Steuerprogramm und die Steuerfunktionen kann einfach und automatisch bei der Inbetriebnahme festgestellt werden, ob die Generation eines Steuerprogramms für einen Anlagensteuerungstyp verwendet werden kann, da das Steuerungsprogramm die Information enthält, auf welchen Anlagensteuerungstypen es ausgeführt werden darf.

Es wird somit ausgeschlossen, dass Steuerfunktionen im Steuerprogramm für nicht installierte Komponenten aktiviert werden. Weiter wird es verhindert, dass ungetestete oder ungewollte Steuerfunktionen bei einem nicht zulässigen Anlagensteuerungstyp verfügbar sind, wodurch ein Sicherheitsrisiko entstehen würde. Das erfindungsgemäße Verfahren stellt sicher, dass die Überprüfung, welcher Anlagensteuerungstyp in der Beförderungsanlage eingebaut ist, ausschließlich anhand der installierten Komponenten ermittelt wird. Es ist keine Interaktion durch einen Serviceingenieur erforderlich.

## Patentansprüche

1. Verfahren zum Aufstarten einer Beförderungsanlage, die mehrere Komponenten (21-27) umfasst, wobei wenigstens ein Beförderungsmittel, eine Anlagensteuerung (20) und ein Antrieb enthalten sind, wobei ein für unterschiedliche Anlagensteuerungen (20) geeignetes Steuerungsprogramm (11) verschiedene Steuerungsfunktionen (12-18) enthält, wobei das Steuerungsprogramm (11) zum Betrieb der Beförderungsanlage in der Anlagensteuerung (20) ausgeführt wird, mit folgenden Schritten:
- Aktivieren der Beförderungsanlage (S30);
- Erkennen von Identifikationsnummern (29) von Komponenten (21-27) der Beförderungsanlage (S31);
- Überprüfen, ob die erkannten Identifikationsnummern (29) zu einer zugelassenen Komponentenkombinationen gehören (S32);
- Erkennen des Anlagensteuerungstyps (11);
- Aktivieren der verschiedenen Steuerungsfunktionen (12-18) im Steuerungsprogramm (11) in Abhängigkeit des erkannten Anlagensteuerungstyps;
- Freigeben der Beförderungsanlage (S37).

2. Verfahren nach Anspruch 1, **dadurch gekennzeichnet, dass** Treiber für die Steuerungsfunktionen (12-18) in Abhängigkeit der aktivierten Steuerungsfunktionen in die Anlagensteuerung (20) geladen werden.

3. Verfahren nach Anspruch 1 oder 2, **dadurch gekennzeichnet, dass** nach dem Erkennen (S32) des Anlagensteuerungstyps überprüft wird (S33), welches Steuerungsprogramm in der Anlagensteuerung (20) gespeichert ist und ob das gespeicherte Steuerungsprogramm für die erkannte Komponentenkombination gültig ist (S34), wobei die Beförderungsanlage freigegeben wird (S37), wenn Komponentenkombinationen und Steuerungsfunktionen zulässig sind.

4. Verfahren nach einem der Ansprüche 1 bis 3, **dadurch gekennzeichnet, dass** nach einem Aktualisieren von Komponenten (21-27) oder Steuerungsfunktionen (12-18) die Beförderungsanlage erneut aktiviert wird.

5. Verfahren nach einem der Ansprüche 1 bis 4, **dadurch gekennzeichnet, dass** die Beförderungsanlage eine Aufzugsanlage ist.

6. Verfahren nach einem der Ansprüche 1 bis 4, **dadurch gekennzeichnet, dass** die Beförderungsanlage eine Rolltreppe ist.

7. Beförderungsanlage mit mehreren Komponenten (21-27), wobei wenigstens ein Beförderungsmittel, eine Anlagensteuerung (20) und ein Antrieb angeordnet sind und die Anlagensteuerung (20) einen vorherbestimmten Funktionsumfang aufweist, wobei zum Betreiben der Beförderungsanlage ein für unterschiedliche Anlagensteuerungen geeignetes Steuerungsprogramm (11) in der Anlagensteuerung (20) ausführbar ist, welches verschiedene Steuerungsfunktionen (12-18) enthält, wobei die Komponenten (21-27) der Beförderungsanlage Identifikationsnummern (29) aufweisen und bei einer Aktivierung der Beförderungsanlage vorgesehen ist, die Identifikationsnummern (29) der aktivierten Komponenten (21-27) zu erkennen; und im Steuerungsprogramm (11) eine Liste zum Überprüfen enthalten ist, ob die erkannten Identifikationsnummern (29) zu einer zugelassenen Komponentenkombination gehören und ein Anlagensteuerungstyp in Abhängigkeit der erkannten Identifikationsnummern (29) im Steuerungsprogramm (11) einstellbar ist und die im Steuerungsprogramm enthaltenen Steuerungsfunktionen in Abhängigkeit des Anlagensteuerungstyps aktivierbar sind; wobei eine Überprüfung vorgesehen ist, ob die erkannte Komponentenkombination mit den aktivierten Steuerungsfunktionen (12-18) übereinstimmt und die Beförderungsanlage freigebbar ist, wenn die Komponentenkombination und die aktivierten Steuerungsfunktionen übereinstimmen.
